Europäisches Patentamt

European Patent Office

Office européen des brevets

(11) Publication number : **0 492 846 A1**

## (12) EUROPEAN PATENT APPLICATION

(21) Application number : **91311284.3**

(22) Date of filing : **04.12.91**

(51) Int. Cl.⁵ : **B23D 23/02**

(30) Priority : **21.12.90 GB 9027842**

(43) Date of publication of application :
**01.07.92 Bulletin 92/27**

(84) Designated Contracting States :
**BE CH DE DK ES FR GB GR IT LI SE**

(71) Applicant : **CALEDONIAN MINING COMPANY LIMITED**
**Carlton Works, Carlton-on-Trent**
**Newark, Nottinghamshire, NG23 6NT (GB)**

(72) Inventor : **Mason, Benjamin**
**Brookfield House, Main Street, Weston**
**Newark, Notts NG23 6ST (GB)**

(74) Representative : **Allen, Oliver John Richard et al**
**Lloyd Wise, Tregear & Co. Norman House**
**105-109 Strand**
**London, WC2R 0AE (GB)**

(54) Improvements in and relating to structural section cutting devices.

(57) A device (2) for cutting structural sections is described. The device (2) comprises a blade (36) and first and second support means. The first support means which may comprise a platen (8) or anvil carries a section to be cut below the blade. The second support means comprises a plurality of support blades (20) movable from a retracted position into a position wherein each is forced against a side of the section. Actuation means (22) is provided which is operable, when a section is held by the second support means, to move the cutting blade (36) along a cutting path in which it cooperates with the support means to remove a portion of the section to thereby cut the section. The support blades (20) are preferably each movable independently of the others. The orientation of the cutting blade (36) and the support blades (20) relative to a section supported on the first support means is suitably adjustable about a vertical axis through the cutting blade (36).

Fig.2.

This invention relates to the cutting of structural sections and, in particular, to cutting such sections by shearing.

Many materials are cut by a shearing process. Softer materials, such as leather and cloth are generally cut by scissors, that is, by the movement of two blades past each other. Alternatively, they may be cut by forcing a sharpened moving blade into the material to be cut against a firm surface or platen. Both of these methods of cutting are also employed with harder materials such as metallic structural sections, but the use of a scissor-type action is more common. However, generally, for harder materials the scissor action is produced by forcing a moving blade, or set of blades, across the face of a fixed set of blades to part the material by shear forces. The gap between the fixed and moving blade faces must be extremely small and the forces exerted between the blades very high. This requirement for a high cutting force means that such cutting machines generally have to be of substantial proportions.

In one known form of shearing device which relies on a scissor-type action, the blades consist of two plates, each of which is formed with a hole whose profile approximates to that of the section to be cut. As a result of this, a particular set of blades can only be employed with one particular type of section and if the cutting machine is to be used for different section types then a corresponding number of sets of blades will be required, each having holes of the appropriate profile. A further result is that the arrangement permits little scope for producing angled cuts since the sections are a relatively close fit in the holes.

A second limitation on possible angularity of cut is consequent on the type of cutting action. If a regular section, for example an I-beam, is held at an angle to the plates then one of its flanges may be cut before the other which may result in distortion of the flange.

A further disadvantage of this type of cutting device is that it cannot readily be included in an automated process due to the difficulty in threading the section through the close-fitting holes in the plates. As noted above, this type of machine is generally of substantial proportions and will, therefore, be difficult to manoeuvre into a position in which a section leaving another machine will pass through the holes in the plates.

Cutting devices with a scissor-type action cleave sections by a single cut and it is, therefore, a requirement of their use that the cut portions move relative to each other. There is little or no material loss because of this, but it further adds to the difficulty in including such machines in an automated process.

Despite these disadvantages, scissor-type action cutting machines are most commonly employed for use with metallic structural sections. However, as was mentioned briefly above, it is also known to use a device in which a moving blade is forced into the section to be cut which is held against a firm surface or platen. In known machines of this type, the platen is shaped to receive and hold firmly the section and a blade is then forced down into the section and against the platen to cut the section by removing a portion thereof, partly as a result of punching out part of the section and partly as a result of shearing the remainder. The cutting operation is progressive, that is the different regions of the section are sheared separately. Hence the cutting force requirements are less than those for scissor-type action cutting machines where the whole section is sheared in one go. Therefore this type of machine can be made of smaller dimensions. However, the loss of a portion of the section as a result of the cutting action is an obvious disadvantage of this type of machine.

Furthermore, in a similar fashion to the scissor-type action machines described above, the use of support members shaped to fit around a particular section firstly limits the angularity of cut which can be achieved and secondly means that a number of different support members have to be provided if the machine is to be used with more than one type of section.

In accordance with the invention a device for cutting structural sections comprises a cutting blade, first and second support means, the first support means being located so as to position a section carried thereon below the blade, the second support means comprising a plurality of support blades movable from a retracted position into a position in which each is forced against a side of a section carried on the first support means and actuation means operable, when a section is held by the second support means, to move the cutting blade along a cutting path in which it cooperates with the support means to remove a portion of the section to thereby cut the section.

The provision of a number of support blades, the position of each of which can be adjusted, preferably independently of the others, means that the cutting device can be employed with different structural sections. Rather than holding a section to be cut by providing a hole or a support platen dimensioned to conform to its shape, adjustable supports are provided so that whatever type of section is to be cut, these can be moved into contact with it to hold it firmly during cutting.

By arranging the device to be of the type in which a portion of a section is actually removed therefrom to cut the section, the force requirements are lessened and the device can be relatively small and light. The device can, therefore, be much more manoeuvrable and this, coupled with the fact that there is no requirement for the two cut parts of the section to move relative each other, renders it more suitable for employment as part of a continuous production process. The adjustability of the support blades further renders the device suitable to form part of the continuous production process since, in contrast to known types of scissor action cutting machines, there is no requirement for "threading" a section through a hole of approximately the same size as the section. Rather, by retracting the support blades, a large opening can be defined between them and the first support means through which the section can be fed more easily.

In a very preferred embodiment, the orientation of the cutting blade and the support blades relative to a section supported on the first support means is adjustable about a vertical axis through the cutting blade.

The provision of support blades whose position can be adjusted in two ways: firstly, towards and away from a section carried in the first support means, and secondly, around an axis through the cutting blade of the device, when combined with a variable orientation blade allows the device to cut sections at any desired angle relative to their main axis. Specifically the ability of the support blades to be moved into a retracted position allows their orientation to be varied relative a section resting on the first support means without impediment to this reorientation from the section itself. The adjustability of the orientation of both the support blades and the cutting blade relative a section means that the two can still cooperate to remove a portion of the section when the cutting blade is forced along the cutting path. Thirdly, the fact that the support blades can be moved individually means that they are capable of firmly holding a section even if, when moving from their retracted position, they approach it at an angle.

Suitably the cutting blade and the first and second support means are mounted on a frame and means are provided for rotating the frame around a vertical axis through the blade. In this way the correct relative positioning of the cutting blade and the support means is maintained at all times, whatever the angle of cut is to be. Means may also be provided for altering the horizontal and vertical position of the frame. This is particularly suitable when the cutting device forms part of a production process since the support means and cutting blade can be brought into a location in which a section leaving a previous process stage can be received between the cutting blade and the first support means and between the support blades.

Very preferably four support blades are provided which are arranged in two pairs, each pair serving to support one side of the section and the movement of each blade being towards and away from the other pair of blades. The support blades are located so that the cutting blade, when moving along the cutting path, passes between the two blades in each pair. Thus each side edge of the cutting blade will cooperate with one of each pair of the support blades to remove a portion from the section to be cut.

Means may be provided for driving the support blades from the retracted position into the supporting position and vice versa. Suitably each driving means is connected to the associated support blade by transmission means which, in response to movement in one direction of the driving means, causes the support blade to move in a transverse direction. An advantage of this is that the transmission means can be so arranged that a relatively small driving force provided by the driving means will produce a relatively large force on the support blades. Furthermore, this arrangement allows the generally required horizontal movement of the support blade to be produced by vertical movement of the driving means which makes the device very compact. The transmission means may comprise a triangular member held with one side vertical by contact between another side thereof with an oppositely angled support bar, the support blade being carried on the vertical side. By suitably angling the support bar, a resultant force on the support blade tending to move it into the supporting position of greater magnitude than the driving force can be produced. The driving means may be in the form of a piston for each support blade, in which case a pressure monitor may be provided for each piston to cut the supply of pressurised fluid thereto when the pressure indicates that the associated support blade has "bottomed at" and is in contact with the section.

The first support means may comprise an anvil or platen with a slot therein through which the cutting blade can pass. Cooperation between the sides of the slot and the edges of the cutting blade will, therefore, produce the removal of a portion of the section to cut the section. The platen is preferably circular. This will allow a single platen to be used with the majority of common section types, the platen supporting the web of the sections. Furthermore, with a circular platen there will be no danger of impingement of the platen on the flanges of such sections in the case where the platen is rotated with the support blades and cutting blades to produce an angled cut. The diameter of the platen would be set to equal the web width of the smallest section with which the device is to be used.

If irregular sections are to be cut then a number of platens could be provided, each suited to a particular irregular section. Alternatively, the first support means could also be made adjustable, for example, it could still consist of a platen, but one which is formed in a number of different sections, each of which is independently movable.

Means may be provided for feeding a section into a position where it is supported by the first support means below the blade and then bringing the section to rest. The feed means may consist of a bending machine so that the cutting device is used in conjunction with the bending machine to produce angled sections of any desired length. With the preferred embodiment of the cutting device, moreover, the lengths of angled section may be provided with ends cut at any desired angle to the axis thereof.

The actuator for the cutting blade may comprise an hydraulic cylinder mounted thereabove, supply of hydraulic pressure to the hydraulic cylinder causing the piston therein to move the cutting blade along the cutting path.

The invention will now be further described by way of example with reference to the accompanying drawings in which:-

Figure 1 is an end view of a cutting device in accordance with the invention;

Figure 2 is an enlarged side view of the cutting device of Figure 1;

Figure 3 is an enlarged plan view of the cutting device of Figure 1, but with the cutting blade and actuator removed for clarity; and

Figure 4 is a series of schematic diagrams which illustrate the cutting action of the cutting device of Figure 1.

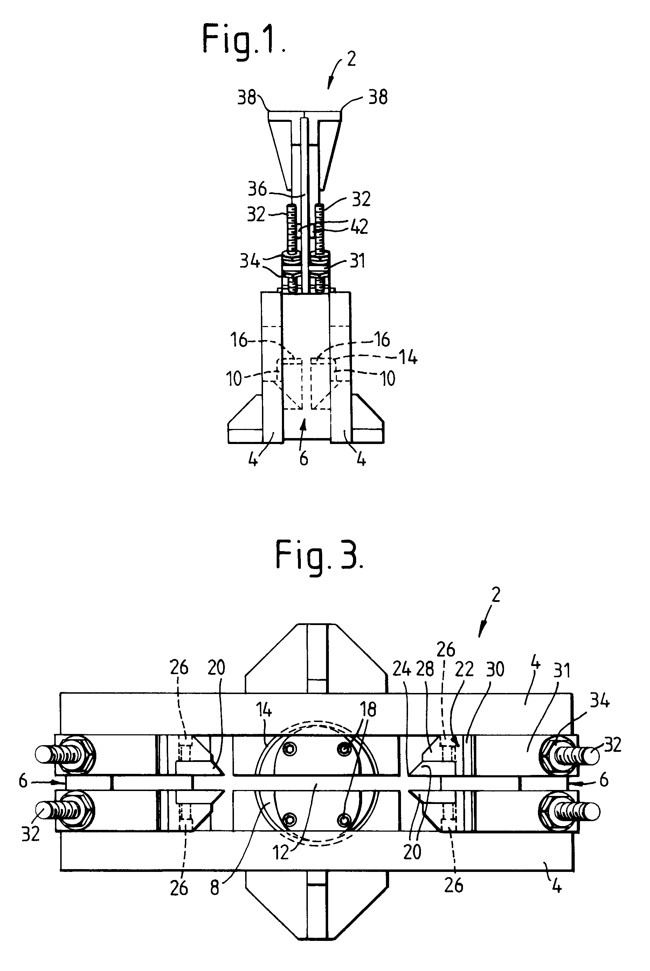

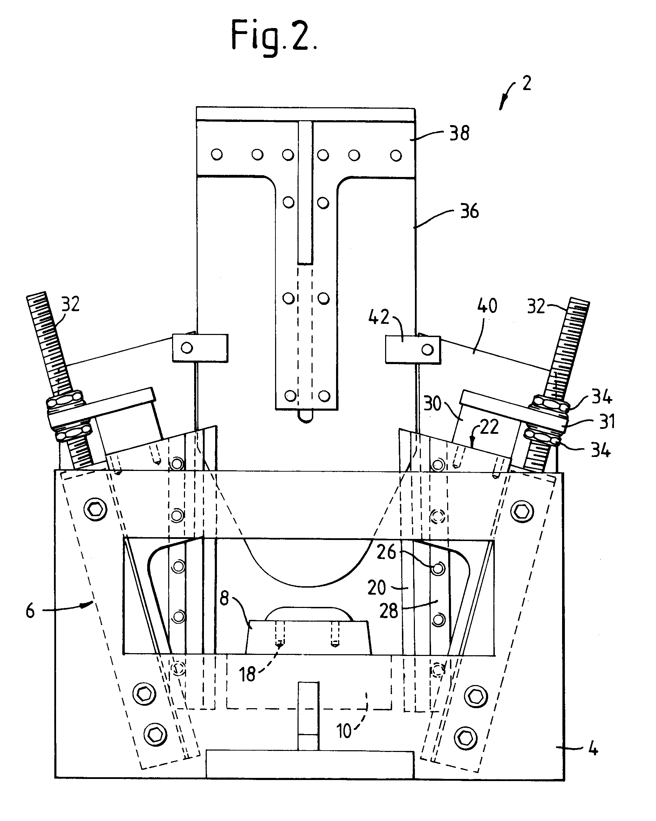

The cutting device 2 shown in Figures 1 to 3 comprises a base consisting of side plates 4 and end plates 6. Carried on the base is a platen 8 formed from two blocks 10, the upper sections of which are semi-circular and which are spaced from each other to define a gap 12 therebetween. A ledge 14 is provided on each block 10 which serve as back stops for two hardened inserts 16 which are held on the blocks 10 by bolts 18.

The platen 8 serves as a base support for a section to be cut by the device 2.

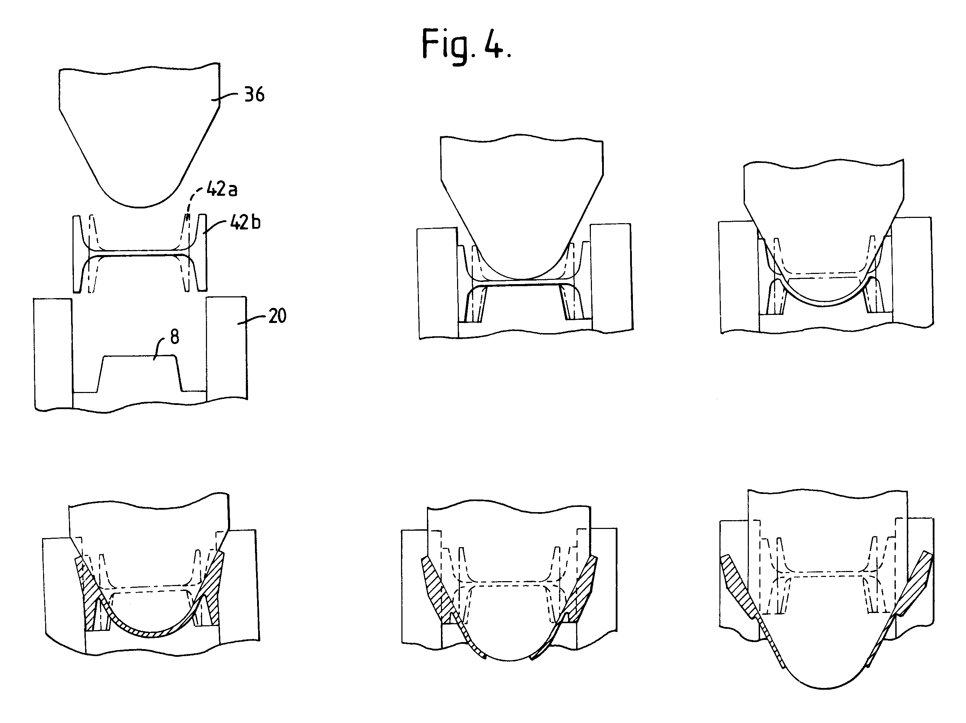

Also carried on the base of the device 2 are four support blades 20 arranged in two pairs, each of which serves to define a continuation of the gap 12 between blocks 10 of the platen 8, see Figure 3.

The support blades 20 consist of a hardened insert mounted on a transmission member 22 which is in the form of a right-angled triangle. The support blades 20 are elongate and one long side thereof is chamfered to provide a knife edge 24 therealong. The transmission members 22 are connected to the insert 20 by bolting, see 26, a flange 28 provided along the hypotenuse of the transmission members 22 across the face of the insert 20 distant from the gap 12. The flanges 28 extend across the face to a point immediately behind the chamfer which forms the knife edge 24.

The support blades 20 are held in device 2 with their knife edges 24 vertical by contact between the longer free face of each transmission member 22 with an end plate 6, the end plates 6 being positioned at an angle to vertical. Drive means is provided for moving the transmission members 22 vertically up and down. The drive means may comprise, as shown, a connector for each transmission member 22 in the form of a block 30 attached to the shorter free edge of the transmission member 22 and a plate 31 attached to the block 30 and extending transversely thereto through a hole in which a threaded extension 32 of the associated end plate 6 passes. Nuts 34 are provided on each extension 32 on either side of the plate 31. By rotating the nuts 34, the block and plate, 30 and 31, of the connector move up or down and hence so does the transmission member 22 attached thereto. Movement of the transmission members up and down will, because of the angled contacting surface between these and the end plates 6, cause the support blades 20 to move generally horizontally.

Whilst the use of the driving arrangement described above will provide for very accurate support blade positioning, preferably the transmission members 22 are driven by pistons. Control means is preferably provided for the pistons to cause them to expand and drive the support blades 20 inwards when a section is carried on the platen 8 and to hold the blades 20 when a pressure sensor indicates that they are pressed hard against the section.

Above the platen 8 and the support blades 20 a cutting blade 36 is carried in a holder 38, which in turn is connected to a frame, not shown, to which the base 4, 6 is also connected. The frame carries a hydraulic cylinder above the cutting blade 36 which, when fluid under pressure is supplied to it, serves to force the blade 36 downwards. Guide plates 40 and side guides 42 carried thereon force the blade 36 to follow a vertical path down between the support blades 20 and the platen 8 through the gap 12, the dimension of which is very slightly greater than the thickness of blade 36.

When a section is to be cut, the support blades 20 are moved into their fully retracted position as shown in Figure 3. The section is then passed into the space defined between the support blades 22 and the platen 8 until the desired length extends beyond the other side of the device 2. The section is then rested on the platen 8 and the support blades 20 are moved in towards the section to force their knife edges 26 hard against it.

If an angled cut was required then, at the point when the section to be cut is resting on the platen 8, the frame, and hence the blade 36, support blades 20 and platen 8, would be rotated around a vertical axis through the blade 36 to bring this into the desired orientation relative the longitudinal axis of the section. Once again the support blades 20 would then move inwards by the action of the driving means therefor but, it will be appreciated, in this case the two support blades 20 of each pair will travel different distances before their knife edges 26 grip the side of the section to be cut.

In either case, with the section to be cut held firmly between the platen 8 and the support blades 20, pressurized fluid is supplied to the hydraulic cylinder above the cutting blade 36 to force this to move down along the cutting path. The result of this is illustrated schematically in Figure 4 which shows the cutting blade 36, the support blades 20 and the platen 8. Figure 4 also shows an I-cross section beam 42, both in the case identified by a. where the cut is to be transverse to the longitudinal axis of the section 42, and the case identified by b. where the cutting plane is to be at an angle to the axis of the section 42. The schematic diagrams of Figure 4 show the production of an angled cut, that is, the cutting of section 42b.

As the cutting blade 36 descends it comes into contact with the web of the section 42b and forces it downwards through the gap 12 between the blocks 10 of the platen 8. Continued movement downwards of the cutting blade 36 brings it into contact with the flanges of the section 42b and these are forced outwards through the gap defined between the pairs of support blades 20. Each face of the cutting blade 36, therefore, cooperates with the knife edges 26 of two support blades 20 and one of the hardened inserts 16 of the platen 8 to shear through the section 42b. The result is a double cut and a portion of the section 42b falls away from the device 2 below the blade 36 when this reaches the extreme of its cutting path, as is shown in the final diagram of Figure 4.

The fact that the section is cut progressively means that the maximum cutting force required is less than with the scissor-type action shearing devices. Accordingly, the device 2 can be relatively small and compact. This makes it more manoeuvrable and suitable means are provided for adjusting the horizontal and vertical position of the frame and hence the parts carried thereon so that the device 2 can be located in a position to receive a section from another machine in a production process. In particular the device 2 can be located to receive a beam from a bending machine so that the bending machine and device 2 together allow production of curved lengths.

It will be appreciated that the cutting device 2 is capable of cutting many different types of section and not simply I-beams as shown in Figure 4. This is a result of the fact that the support blades are all individually movable towards and away from the platen. The platen, itself being circular, will be capable of being used with most common types of section without any danger of it impinging on part of the section when an angled cut is required and the platen is, therefore, rotated. For uncommon or irregular sections, different platens could be provided or the platen could be made of variable cross-section by, for example, making it with each half in a number of portions individually movable to produce a desired shape. It will further be appreciated that if the section to be cut has straight edges, as the type shown here does, then there will be no danger of distortion of the edges since these will be held by the support blades 22 during cutting.

The range of possible angles is limited to the amount by which the frame can be rotated before the section will impinge against the support blades 22. The location of these and their size means that the range can be relatively large so that all practical cutting angles can be achieved.

## Claims

1. A device for cutting structural sections comprising a cutting blade, first and second support means, the first support means being positioned to locate a section carried thereon below the blade, the second support means comprising a plurality of support blades movable from a retracted position into a position in which each is forced against a side of a section carried on the first support means and actuation means operable, when a section is held by the second support means, to move the cutting blade along a cutting path in which it cooperates with the support means to remove a portion of the section to thereby cut the section.

2. A cutting device as claimed in Claim 1 wherein each support blade is movable independently of the other support blade(s).

3. A cutting device as claimed in either Claim 1 or Claim 2 wherein the orientation of the cutting blade and the support blades relative to a section carried on the first support means is adjustable about a vertical axis through the cutting blade.

4. A cutting device as claimed in any preceding Claim wherein the cutting blade and the first and second support means are mounted on a frame, means being provided for rotating the frame around a vertical axis through the blade.

5. A cutting device as claimed in any preceding Claim wherein drive means is provided for each support blade for moving the support blade from the retracted position into a supporting position and vice versa, the drive means being connected to the support blade associated therewith by transmission means which, in response to movement of the drive means in one direction, causes movement of the support blade in a transverse direction.

6. A cutting device as claimed in Claim 5 wherein the transmission means comprises a member having two sides at an angle to each other, one of the sides being held vertical by contact between the other side and an oppositely angled support bar, the support blade being carried on the vertical side.

7. A cutting device as claimed in any preceding Claim wherein the first support means comprises an anvil or platen with a slot therein through which the cutting blade can pass.

8. A cutting device as claimed in any preceding Claim wherein four support blades are provided arranged in two pairs, each pair serving to support one side of the section and the movement of each blade being towards and away from the other pair of blades.

9. A cutting device as claimed in any preceding Claim wherein means are provided for feeding a section into position where it is supported by the first support means below the blade and then bringing the section to rest in this position.

10. A cutting device as claimed in Claim 9 wherein the feed means consist of a device for bending a structural section.

# Fig.1.

# Fig.3.

# Fig.2.

Fig. 4.

# EP 0 492 846 A1

**European Patent Office**

## EUROPEAN SEARCH REPORT

Application Number

EP 91 31 1284

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-384 440 (KRÜGER) <br> * the whole document * | 1-5,7 | B23D23/02 |
| Y | | 6,8-10 | |
| Y | FR-A-2 163 326 (GLAENZER SPICER) <br> * page 4, line 29 - page 5, line 17; figures 6,11 * | 6 | |
| Y | FR-A-339 486 (WARD) <br> * page 1, line 46 - page 2, line 10; figures 2-7 * | 8 | |
| Y | EP-A-0 386 456 (M.E.P. MACCHINE ELETTRONICHE PIEGATRICI) <br> * column 3, line 8 - column 4, line 18; figure * | 9,10 | |
| | | | **TECHNICAL FIELDS SEARCHED (Int. Cl.5)** <br><br> B23D |

The present search report has been drawn up for all claims

| Place of search | Date of completion of the search | Examiner |
|---|---|---|
| THE HAGUE | 26 MARCH 1992 | GARELLA M.G.C.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

10